(19)

**Europäisches Patentamt**

**European Patent Office**

**Office européen des brevets**

(11)  **EP 3 657 212 A1**

(12)  # EUROPEAN PATENT APPLICATION

(43)  Date of publication:
**27.05.2020 Bulletin 2020/22**

(21)  Application number: **18207247.0**

(22)  Date of filing: **20.11.2018**

(51)  Int Cl.:
**G01S 13/90** *(2006.01)*

(84)  Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71)  Applicant: **Evosar Technologies GmbH 2700 Wiener Neustadt (AT)**

(72)  Inventors:
- **Gurianov, Maksim 2700 Wiener Neustadt (AT)**

- **Kuznetsov, Victor 2700 Wiener Neustadt (AT)**
- **Antipov, Alexey 2700 Wiener Neustadt (AT)**
- **Bezouglov, Valeri 2700 Wiener Neustadt (AT)**
- **Leushev, Yury 2700 Wiener Neustadt (AT)**

(74)  Representative: **Papula Oy P.O. Box 981 00101 Helsinki (FI)**

(54)  **METHOD AND SYSTEM OF DECOMPOSITION OF COMPOSITE TARGETS ON ELEMENTS OF A RADAR TARGET SIGNATURE WITH A SUPER-RESOLUTION, USING THE TOTAL SIGNAL SPECTRUM**

(57)  This technical solution generally refers to computer engineering and specifically refers to methods and systems of the decomposition of composite targets into elements of the radar target signature. The method for decomposing the composite targets into elements of a radar signature of a super-resolution target, using the entire signal spectrum, where obtaining at least one radar image in the form of a radio hologram from a radar; determining by means of a computer the complex amplitudes and coordinates of bright points on the radar image obtained in the previous step, on the basis of an iterative procedure from brighter to less bright spots; subtracting by means of a computer the signals of bright spots from a previously received radar image, which results in a background image left; performing the smoothing of the obtained background image by using a filter suppressing the speckle noise; forming the output radar image, by means of a computer, on the basis of a set of bright spots with amplitudes, coordinates in azimuth and range, as well as a smoothed background signal. The technical result - improving the quality of processing the RI.

Fig. 4

**Description**

TECHNICAL FIELD

This technical solution generally refers to computer engineering and specifically refers to methods and systems of the decomposition of composite targets into elements of the radar target signature.

BACKGROUND OF THE INVENTION

In the prior art it is known that the Synthetic Aperture Radar (hereinafter referred to as "SAR") is a means of all-weather, round-the-clock surveillance with a high spatial resolution. With the help of SAR, a high-quality radar image (hereinafter referred to as "RI") of the earth's surface (ES) with good deciphering properties can be obtained.
However, a conventional RI obtained by the traditional method of synthesis and without the use of special means of improving digital signal processing (DSP), as a rule, is affected by a number of distorting factors that interfere with the decoding and an automated recognition.
Among the factors that distort a conventional RI the following stand out:

1) A strong multiplicative interference with a 100% relative level (on power RI), a so-called speckle noise, which arises due to the coherence of a probe radiation (PR) of the SAR;
2) The presence of bright spots on RI with characteristic masking "whiskers", due to the large side lobes of the impulse response (IR) of the SAR.

It is noted that in recent decades considerable efforts have been made by scientists and developers of SAR, aimed at finding methods to reduce speckle noise and suppress side lobes of bright spots. A lot of scientific papers are published, but the problem remains of current interest.

SUMMARY

This technical solution is focused on removal of disadvantages common to the solutions known in the prior art.
The technical task or the technical problem solved in this technical solution is to increase the resolution of the RI.
The technical result achieved when solving the above technical problem, is to obtain RI with enhanced decryption properties.
This technical result is achieved by implementing a method for decomposing the composite targets into elements of a radar signature of a super-resolution target, using the entire signal spectrum, where obtaining at least one radar image in the form of a radio hologram from a radar; determining by means of a computer the complex amplitudes and coordinates of bright points on the radar image obtained in the previous step, on the basis of an iterative procedure from brighter to less bright spots; subtracting by means of a computer the signals of bright spots from a previously received radar image, which results in a background image left; performing the smoothing of the obtained background image by using a filter suppressing the speckle noise; forming the output radar image, by means of a computer, on the basis of a set of bright spots with amplitudes, coordinates in azimuth and range, as well as a smoothed background signal.
In some embodiments of the invention the radio hologram is obtained as a complex Synthetic Aperture Radar (SAR) data function.
In some embodiments of the invention the amplitudes of the bright spots are determined in a side view mode.
In some embodiments of the invention determining complex amplitudes and coordinates of the bright spots comprises excluding composite bright spots from consideration based on an iterative procedure.
In some embodiments of the invention the composite bright spots are excluded until all the remaining spots become approximately of the same width of the profile.
In some embodiments of the invention determining the amplitudes of bright spots comprises stopping the iterative procedure if an amplitude of a currently determined bright spot is below a predetermined threshold value.
In some embodiments of the invention the threshold value is set to a fraction of a maximum amplitude of the input radar image.
In some embodiments of the invention subtracting signals corresponding to bright spots from the previously received radar image also comprises converting a complex background signal into a real-valued background signals for an amplitude image and for a power image.
In some embodiments of the invention smoothing the remaining background image comprises using a Lee filter, a Kuan filter, a Lee-sigma filter, and/or a Gamma filter.
In some embodiments of the invention the output radar signature is formed on a discrete grid with an increment of constant azimuth and range.

In some embodiments of the invention for selected bright spots their precise coordinates are assessed with a smaller increment.

BRIEF DESCRIPTION OF THE DRAWINGS

The features and advantages of this technical solution will be evident from the following detailed description and attached drawings where:

Figure 1 illustrates the model of the radar image (a high-quality picture);
Figure 2 shows the profile of the RI amplitude of a bright spot based on the range; this is a RI line with a width of about 11 samples (in the specific example of implementation) with a bright spot in the center. The spot profile is shown in blue.
Figure 3 shows an embodiment of the formation of the criterion of the maximum of the correlation sum (qualitative figure).
Figure 4 shows an embodiment of a method for decomposing the composite targets into elements of a radar signature of a target with super-resolution, using the entire signal spectrum.
Figure 5 shows an embodiment of a system for decomposing the composite targets into elements of a radar signature of a target with super-resolution, using the entire signal spectrum.

DETAILED DESCRIPTION

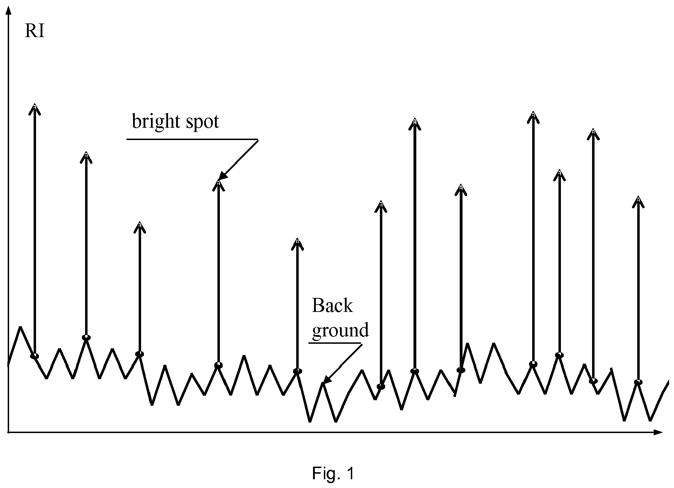

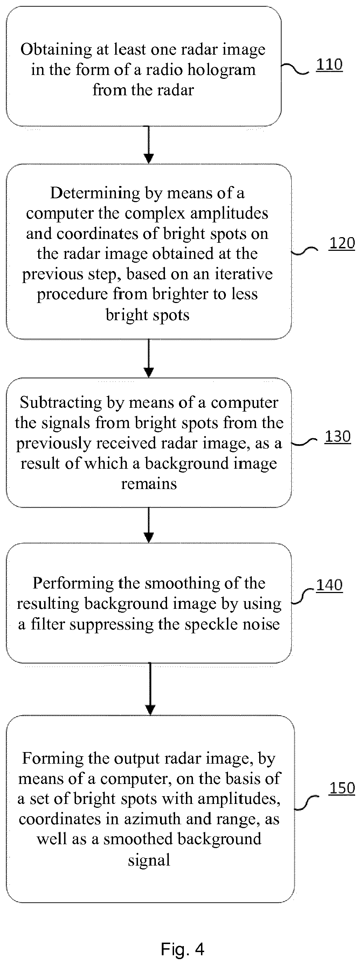

This technical solution can be implemented on a computer or another data processing device in the form of an automated system or a machine-readable medium containing commands for the embodiment of the above-mentioned method.
The technical solution can be implemented in the form of a distributed computer system (centralized or decentralized), the components of which are cloud or local servers.
In this solution, a system means a computer system or an automated system (AS), an electronic computing machine (ECM), numeric control (NC), a programmable logic controller (PLC), a computer-assisted command system and any other devices capable of performing a specified, clearly defined sequence of calculation operations (actions, commands).
A command-processing device means an electronic unit or an integrated circuit (microprocessor) which performs computer-based commands (programs).
The command-processing device reads and performs computer-based commands (programs) from one or more data storage devices. A data storage device can represent hard disk drives (HDD), flash memory, read-only memory (ROM), solid-state drives (SSD), optical disc drives (ODD), cloud storages, etc.
A program is a sequence of commands to be performed by a computer control device or a command-processing device.
This technical solution is based on the fact that real RI consist of a set of bright spot targets (points) and a background, as shown in Fig. 1. As a rule, bright spots on RI are artifacts - a result of human activity and are of particular interest for interpretation. As for the background, it is, as a rule, uninformative and affected by speckle noise.
The method of decomposing the composite targets into elements of a radar signature of a super-resolution target, using the entire signal spectrum, shown in block diagram form in Fig. 4, is detailed below as a series of computational steps.
**Step 110:** obtaining from a radar at least one radar image comprising a plurality of spots of various brightness in form of a radio hologram.
The synthetic aperture radar (ASR) is a pulsed coherent radar, which is installed on a moving medium. SAR images are formed as a result of the summation in the receiving path of the station of the waves reflected from the terrain with a reference wave. A typical problem of SAR images is the presence of speckle noise therein, due to the interference of echo signals from the reflectors located in the same ultrasonic beam. In SAR images, speckle noise appears as granular spots. By analyzing SAR images, it was obtained that in different areas of the SAR images the speckle noise probability distribution density differs from the theoretical one.
The main objective of this invention is to obtain from the input complex RI$^{\mathbf{Z}}$ obtained from the radar, a fragment of the earth's surface (ES):

$$\mathbf{Z}_{kn}, \quad k = 0,1,\ldots, \quad n = 0,1,\ldots,$$

where:

k, n - integer indices in azimuth and range, which correspond to the orthogonal coordinates of the ES:

$$x_k = k \cdot \Delta_x, \quad y_n = n \cdot \Delta_y;$$

$\Delta_x$ and $\Delta_x$ - the increments of the input RI, respectively, in azimuth and range.

After the implementation of the whole method, an output radar image **Q** with improved characteristics (ORI) is obtained. An improvement in RI is understood as an increase in its interpreting properties, which can be achieved both by improving spatial resolution and by reducing speckle noise and azimuth "whiskers" (bright spots) on ORI.

In some embodiments of the invention, the increments of RI in azimuth and range can be chosen arbitrarily during image synthesis. However, the spatial resolution of the RI is limited and is determined by the characteristics of the radar used. In a specific example of the invention implementation, the increments of the RI in distance and azimuth are made the same, equal to 12.5 cm

The response of a point target on RI in some embodiments takes the form of a cross. When surveying a set of adjacent point targets, their responses overlap each other, which prevents the interpreting of RI. This technical solution determines with sub-pixel (up to 0.1 px) accuracy the location, brightness and phase of point targets and isolates them from RI. In the tasks of automatic recognition and classification of objects, only isolated targets can be used, with an unwanted background and noise signals being eliminated.

In some embodiments, the desired complex RI is represented in the form of the sum of a set of bright spots with unknown parameters (amplitudes, phases and coordinates) and a "smooth" background image. For example, coordinates may have the following values: 334.8 m in azimuth (from the top of the image, vertically); 634.2 m for the slant range (from the left edge of the image, horizontally), and the phase may take the value of -0.6 $\pi$. The specific number of amplitude on RI depends on the synthesis procedure and is not limiting, since the relative amplitude of the target is important relative to other spots of the image.

In this technical solution, the following steps are carried out sequentially by using a computer:

- complex amplitudes and coordinates of the bright spots on RI are estimated using a radio hologram **Z** based on an iterative procedure (from brighter to less bright spots);

- the signals from bright spots are subtracted from the an input RI **Z.** As a result, the background image is left;

- the background image is "smoothed" using one of the filters that suppresses speckle noise (keeping edges on the image);

- the real ORI is formed Q from the "good" IR (for bright spots).

Preliminary preparatory (auxiliary) computational procedures are performed with a complex RI of the ES fragment:

$$\mathbf{Z}_{kn}, \quad k = 0,1,\dots, \quad n = 0,1,\dots .$$

RI are obtained in a complex form, expressed as a matrix of complex numbers, where the index k is the azimuth and the index n is the range.

The purpose of these calculations is to evaluate the following parameters and characteristics of radar data for further use in the technical solution:

- azimuth IR (hereinafter "impulse response") - $\Phi_a(x)$, where: x - an azimuth coordinate,
- IR in range - $\Phi_r(y)$, where: y - coordinate in range, and
- the average of the amplitude RI "cleared" from bright spots - $M_z$.

In some embodiments, the RI of interest is obtained in real time.

In other embodiments, the technical solution is used in some applications, when it is used in small areas of RI and fairly fast calculations are implemented IR in azimuth is the same for all images, and this response depends on the characteristics of the antenna used, the wavelength of the probing radiation and the slant range to the target. When processing small (no more than 100 m in range) fragments of RI, the difference in azimuth IR at different distances can be neglected.

IR in range is estimated by a specific model of RI. When processing multiple fragments of a single image, one of IR can be used.

In the side view mode, the IR in azimuth is real and is determined by the formula by means of a computer:

$$\Phi_a(x) = \frac{1}{C_{\Phi a}} \int_{-\frac{T}{2}}^{\frac{T}{2}} \frac{A(\psi)}{D^2(t)} \cos\left(4\pi \frac{\psi x}{\lambda}\right) dt \qquad , \qquad C_{\Phi a} = \int_{-\frac{T}{2}}^{\frac{T}{2}} \frac{A(\psi)}{D^2(t)} dt \qquad ,$$

where:

$t$ - sampling time: $-\dfrac{T}{2} \le t \le \dfrac{T}{2}$; the center of the aperture corresponds to $t = 0$;

$C_{\Phi a}$ - a constant that normalizes the value $\Phi_a(x)$ to one with: $x = 0$ : D($t$) - slant range;

A($\psi$) - the amplitude pattern of a transmit/receive antenna;

$\psi$ - current viewing angle (angle between the axis of the antenna and the current direction of observation):

$$\psi(t) \approx \frac{V \cdot t}{D_0} \; ;$$

$V$ - air vehicle speed;

$\lambda$ - PR wave length;

$D_0$ - the minimum observation range at the synthesis aperture: $D_0 = D(0)$.

The side view mode is a radio hologram survey mode in which the plane flies straight and the antenna "looks" sideways, the direction of its beam is perpendicular to the flight path. Also there are front, front side view modes, and the projector mode. Different image synthesis algorithms are used for different survey modes.

An azimuth IR is calculated with the computer that performs this technical solution. If the probing radiation wavelength and directional pattern of the antenna used is unchanged, then all sorts of azimuth IR for different ranges can be calculated in advance and recorded in the computer's memory as a dictionary.

In some embodiments of the invention, in general, the IR in azimuth $\Phi_a(x)$ is a complex function:

$$\Phi_a(x) = \frac{1}{C_{\Phi a}} \int_{-\frac{T}{2}}^{\frac{T}{2}} \frac{A(\psi)}{D^2(t)} \exp\left(4\pi \mathbf{j} \frac{\psi x}{\lambda}\right) dt$$

In other embodiments, the limits of integration change with the front side view, and the function is complex-valued.

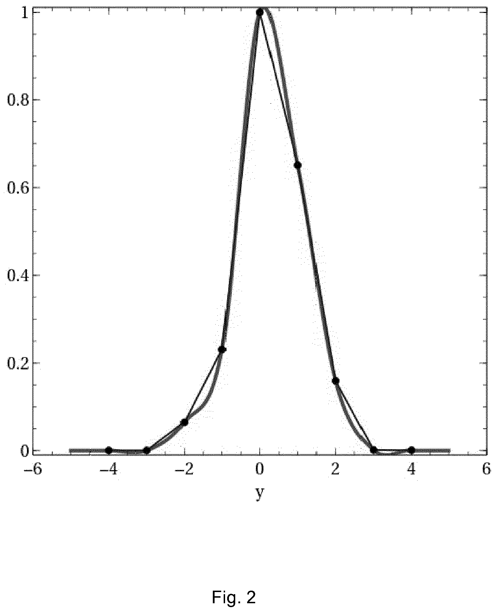

In the next step, the IR in range $\Phi_r(y)$ is estimated from the amplitude profile of the RI of bright spots in range, as shown in Fig. 2 At the same time, the main difficulties in evaluating this IR are related to the fact that:

- a part of the selected bright spots may be "composite", i.e. they consist of several bright spots close in range;
- he recorded point profiles can be shifted relative to each other in range.

The evaluation procedure proposed in this invention $\Phi_r(y)$ is given below and solves the indicated problems.

The registered point profiles can be shifted relative to each other in range due to the discretization of the continuous signal-response of the point. In fact, the point is located between the indications of the RI grid, and due to the discretization of the signal, the maximum of its profile on the RI does not coincide with its location (no more than half the indication).

At this stage, bright spots ($\square 50 \div 100$ spots) are selected on the RI and the corresponding vectors of the RI amplitude profiles are recorded in range:

$$\left\{ \left| \mathbf{Z}_{-J} \right|, \left| \mathbf{Z}_{-J+1} \right|, ..., \left| \mathbf{Z}_0 \right|, ..., \left| \mathbf{Z}_{J-1} \right|, \left| \mathbf{Z}_J \right| \right\},$$

with discrete coordinates in range:

$$\left\{ ..., \left( y_0 - \Delta_y \right), y_0, \left( y_0 + \Delta_y \right), \left( y_0 + 2\Delta_y \right), ... \right\},$$

where:

$|\mathbf{Z}_0|$ - the RI amplitude in the center of the profile of the selected bright spot with a discrete coordinate $y_0$;
$(2J + 1)$ - profile vector size, algorithm parameter;
$\Delta_y$ - increment of the input RI in range.

These spots are selected automatically by the computer, for example, the 100 brightest ones are selected. In the specific example of the implementation such a number of spots is selected on the basis of the characteristic dimensions of the processed fragments of RI. Too many spots are undesirable because instead of good, real bright target spots, their outsets and too dim targets will appear, the signal from which is blocked with noise.

Registration means copying from RI and storing separately, in the form of arrays, which is convenient for subsequent software or hardware processing by the computer.

For each of the selected spots, the characteristic width of its profile is estimated $R_k$:

$$R_k = \sqrt{ \left( \sum_{j=-J}^{j=+J} j^2 P(j) \right) - \left( \sum_{j=-J}^{j=+J} j\, P(j) \right)^2 }, \quad \text{where:} \quad P(j) = \frac{|\mathbf{Z}_j|}{\sum_{j=-J}^{j=+J} |\mathbf{Z}_j|}.$$

The formula is used for the mean square deviation of a random value, the discrete probability density function of which is proportional to its profile in range $P(j)$.

The width of the profile essentially means how wide the "dome" of the signal from the point in range.

On the basis of the iterative procedure, composite bright spots are eliminated (rejected) by means of the operation of the computer. The spots are rejected until all remaining spots become approximately of the same width. The criterion for rejection of composite points is the width of the profile $R_k$.

The iterative procedure is performed as follows:

If for the current set of bright spots the maximum profile width $R_m$ satisfies the inequation:

$$R_m > M_R + C_\sigma \sigma_R,$$

where:

$M_R$ and $\sigma_R$ - mean and square mean deviation of the width of the profile for the current set of bright spots:

$$M_R = \frac{1}{K_i} \sum_{k=0}^{K_i-1} R_k, \quad \sigma_R = \sqrt{ \left( \frac{1}{K_i} \sum_{k=0}^{K_i-1} R_k^2 \right) - M_R^2 };$$

$K_i$ - the number of spots in the current array;

$C_\sigma$ - constant, algorithm parameter ($C_\sigma \square 1 \div 2$),

then the corresponding bright spot is excluded from consideration. The bright spot that is excluded from consideration is not taken into account when calculating the criterion for stopping iterations and calculating the IR in range $\Phi_r(y)$.

The function $\Phi_r(y)$ is evaluated by the formula:

$$\Phi_r(y) \approx \frac{1}{C_{\Phi r}} F^{-1}\left\{\sum_k \left|F_k(v)\right|\right\}, \qquad C_{\Phi r} = F^{-1}\left\{\sum_k \left|F_k(v)\right|\right\}\bigg|_{y=0},$$

where:

$F^{-1}\{f(v)\}$ - the inverse Fourier transform of a function $f(v)$:

$$F^{-1}\left\{f(v)\right\} = \int_{-\infty}^{+\infty} f(v)\cos(2\pi v y)\,dv\ ;$$

$F_k(v)$ - the Fourier transform of the profile of the $k$-th point of a selected set of bright spots:

$$F_k(v) = \int_{-\infty}^{+\infty}\left(\sum_{j=-J}^{J}\left|\mathbf{Z}_j\right|\Lambda\left(\frac{y-\Delta_y j}{\Delta_y}\right)\right)\exp(-2\pi\mathbf{j}\,vy)\,dy =$$

$$= \sum_{j=-J}^{J}\left|\mathbf{Z}_j\right|\cdot\mathrm{Sinc}^2\left(\pi v\Delta_y\right)\cdot\exp\left(-2\pi\mathbf{j}\,v\Delta_y j\right),$$

where:

$\Lambda(x)$ - roof function:  $\Lambda(x) = \begin{cases} 1-|x|, & \textit{with: } |x| \le 1.0, \\ 0 & \textit{with: } |x| > 1.0; \end{cases}$

$\mathrm{Sinc}^2(\pi v\Delta_y)$ - the Fourier transform of a function $\Lambda\left(\dfrac{y}{\Delta_y}\right)$;

For the profiles in range, linear interpolation is used (using a roof function).

$C_{\Phi r}$ - a constant that normalizes the value $\Phi_r(y)$ with: $y = 0$ to one. The specific numerical values of this constant depend on the input RI and are not limiting.

Above, when estimating the IR, it is assumed that the Fourier transform from IR is the frequency response (FR) in range $F(v)$, where: $v$ - a spatial frequency is an even positive function: $F(v) = F(-v) \ge 0$.

The parity of the FR ensures the real nature of the IR in range, and its positivity makes it relatively simple to eliminate the displacements of the measured profiles of spots relative to each other.

It is noted that when the profile of the $k$-th point in range is shifted by $l_k$, a phase factor $\exp(2\pi\mathbf{j}l_k v)$ appears in the Fourier spectrum of its profile $F_k(v)$, the modulus of which is equal to one. Then, with: $F(v) \ge 0$, the module operation $|F_k(v)|$ eliminates the profile displacement in range.

Next, the average value of the RI amplitude of the ES fragment $M_Z$ is estimated without taking into account the signals from bright spots. This refers to the average amplitude of the background signal of the RI fragment, so there is no need to take signals from bright spots. To clear the RI from bright spots in some embodiments of the implementation a median filter may be used. In other embodiments, it is alternatively possible to calculate the average value of the RI fragment by applying masking, that is, by skipping the selected bright spots, but this is more time-consuming from the point of view of implementation, although it is also applicable.

In a specific implementation, the median filter determines the median $\mu_F$ of the multiple elements of the size filter window $N_W \times N_W$:

$$\left\{ \mathrm{F}(i,j), i = 0,1,...,(N_W - 1), \quad j = 0,1,...,(N_W - 1) \right\}.$$

To calculate the median, the window set {F($i,j$)} is ranked in amplitude and presented in the form of a monotonically increasing series:

$$\left\{ \mathrm{F}(n), \quad n = 0,1,...,(N_W^2 - 1) \right\},$$

so:

$$\mathrm{F}(n) \leq \mathrm{F}(n+1), \quad n = 0,1,...,(N_W^2 - 2).$$

The median of interest is the central element of this series:

$$\mu_F = \mathrm{F}\left( \frac{N_W^2 - 1}{2} \right).$$

The image is bypassed by a sliding window algorithm known from the prior art. The window dimensions, in general, are selected based on the characteristics of the processed RI. In a specific implementation, a 13 sample wide window was used.

An example of calculating the median in numbers:

- 41, 40, 39, 40, 40, 41, 40, 41, 39 ---> value ranging:
- 39, 39, 40, 40, 40, 40, 41, 41, 41 ---> the median is 40 (4th element of the ranked series).

With a large filter window size $N_W$, the "simple" implementation of the median filter algorithm turns out to be very "slow" due to the time-consuming operation of ranking the elements of the filter window. In this case, a fast algorithm can be used for the median filter, for example, from a source of information [1]. The fast median filtering algorithm is based on the fact that during a sequential processing of an image by a sliding window, a full ranking of the values in the window cannot be done, but removed from the ranked series the values that are no longer included in the window and add the new ones to it. Greater acceleration can be achieved if one works not with a ranked series of values, but with local histograms, where adding/deleting a value is performed by a simple increment/decrement operation of the integer value by one.

**Step 120:** determining by a computer complex amplitudes and coordinates of bright spots on the radar image obtained at the previous step, based on an iterative procedure from brighter to less bright spots.

Next, the bright spots of the fragment are searched and their parameters are evaluated - amplitudes, phases and coordinates. This step is performed on the basis of an iterative computing procedure, at the current, $i$-th step of which:

1) The current bright spot is determined with the maximum value of the modulus of the (current) RI equal to $|Z_m|$ and discrete coordinates: $x_m$ - in azimuth, with an increment $\Delta_x$ and $y_m$ - in range, with an increment $\Delta_y$.
2) The spatial spot displacements are estimated:

   a. in azimuth relative to $x_m$ and
   b. in range relative to $y_m$.

3) The amplitude and phase of the spot are estimated.
4) The signal of the bright spot is subtracted from the current RI.

An iterative procedure for finding bright spots is completed if the amplitude of the current bright spot is less than a predetermined threshold. The threshold value is set not by a specific number, but by fractions of the maximum amplitude of the input RI, for example, 0.2. This is not the only criterion for stopping the iterations, since in some embodiments, the implementation can specify a fixed number of iterations, for example, 150, to find the 150 brightest spots on the RI fragment.

For example, with the RI increment in range and azimuth of 0.125 meters, the spatial displacement of the target in azimuth may be 0.04375 m, in range 0.0125 m.

The spatial displacements of the spot in azimuth relative to $x_m$ are estimated is as follows. The estimation of the azimuth displacement of the $i$-th point $x$ is obtained from the condition of maximum modulus of the correlation sum $C_a(x)$ over $x$ on the interval $\left( -\dfrac{\Delta_x}{2} \div \dfrac{\Delta_x}{2} \right)$:

$$\underset{-\frac{\Delta_x}{2} < x < \frac{\Delta_x}{2}}{\mathrm{MAX}} \left( \left| C_a(x) \right| \right) ,$$

$$C_a(x) = \sum_{j=-J_{fx}}^{+J_{fx}} \mathbf{Z}_{m+j} \Phi_a \left( x + j\Delta_x \right) ,$$

where:

$J_{fx}$ - the size of the sliding window when searching for bright spots, which is a parameter of the algorithm;
$x = (x_m - x_i)$ - the displacement of the $i$-th spot relative to the discrete coordinate $x_m$ ; $\Phi_a(x)$ - azimuth IR;
$|\mathbf{Z}|$ - the module of a complex number $\mathbf{Z}$;

$\mathbf{j}$ - virtual value: $\mathbf{j} = \sqrt{-1}$.

Estimation of the displacement of spot $x$ by the above criterion is equivalent to a joint estimate of the amplitude $A_i$, phase $\varphi_i$, and coordinates $x_i$ of the $i$-th spot by the more general minimum criterion W :

$$W \left( A_i, \varphi_i, x_i \right) = \sum_{j=-J_{fx}}^{+J_{fx}} \left| \mathbf{Z}_{m+j} - \Phi_a \left( x_i + j\Delta_x \right) A_i \exp \left( \mathbf{j} \varphi_i \right) \right|^2 .$$

According to this criterion, the parameters of the $i$-th point are chosen in such a way as to best approximate the spots of the input RI $\mathbf{Z}_{m+j}$ by a bright spot signal $\Phi_a(x + j\Delta_x)A_i \exp(\mathbf{j}\varphi_i)$ according to the criterion of the minimum of the sum of squares of approximation errors. The resulting estimates of the parameters of spots are close in accuracy to the optimal ones. However, strictly speaking, they are not optimal, because the noise in the adjacent I samplings are correlated. The point is that the estimates of the parameters of the spots by the criterion of the minimum of the sum of squares of errors correspond to the criterion of maximum likelihood only if the noises in the adjacent samples of the RI are not correlated.

The estimates of the amplitude and phase of the spot are determined by the formula:

$$A_i = \frac{\left| C_a \left( x_i \right) \right|}{\displaystyle\sum_{j=-J_{fx}}^{+J_{fx}} \Phi_a^2 \left( j\Delta_x \right)} , \qquad \varphi_i = \mathrm{atan} 2 \left( \mathrm{Im}\, C_a \left( x_i \right), \mathrm{Re}\, C_a \left( x_i \right) \right) ,$$

where:

ReC $u$ ImC - real and virtual parts C ;

atan2($Im,Re$) - the arctangent defined on the interval: $-\pi \div \pi$.

If the amplitude value of the spot $A_i$ is:

$$A_i = \frac{\left| C_a(x) \right|}{\displaystyle\sum_{j=-J_{fx}}^{+J_{fx}} \Phi_a^2(j\Delta_x)}$$

which is less than the threshold $\Pi$:

$$A_i < \Pi,$$

$$\Pi = C_\Pi \cdot M_Z,$$

where:

$M_Z$ - the average value of the amplitude of the background of the RI of the ES fragment;

$C_\Pi$ - threshold constant, algorithm parameter,

then the iterative procedure for the search of bright spots is completed.

The selected spot displacement $y = (y_m - y_i)$ in range $y_i$ relative to the discrete coordinate $y_m$ is estimated by the criterion of the maximum of the correlation sum $C_r(y)$:

$$\underset{-\frac{\Delta_y}{2} < y < \frac{\Delta_y}{2}}{\mathrm{MAX}} \left( \left\| C_r(y) \right\| \right),$$

$$C_r(y) = \sum_{j=-J_{fy}}^{+J_{fy}} \tilde{\mathbf{Z}}_{m+j} \Phi_r\left(y + j\Delta_y\right),$$

$$\tilde{\mathbf{Z}}_{m+j} = \Phi_a\left(x_1 - x_i\right)\mathbf{Z}_{1,m+j} + \Phi_a\left(x_2 - x_i\right)\mathbf{Z}_{2,m+j},$$

where:

$x_1,x_2$ - the nearest in azimuth (to the selected spot) discrete coordinates (on the grid with an increment $\Delta_x$): $x_1 \leq x_i \leq x_2$, $x_2 - x_1 = \Delta_x$;

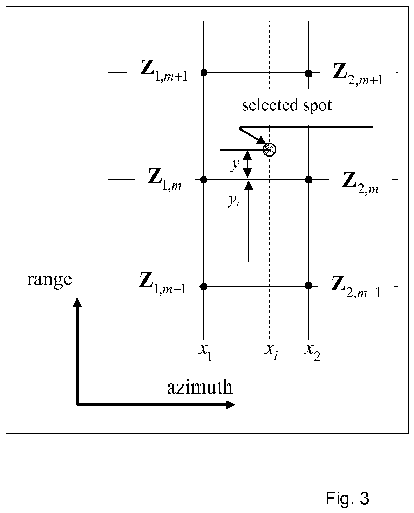

$\mathbf{Z}_{1,m+j}, \mathbf{Z}_{2,m+j}$ - the elements of the columns of RI with azimuth coordinates, respectively, $x_1$ and $x_2$, as shown in Fig. 3.

The amplitude $A_i$ and phase $\varphi_i$ of the bright spot are estimated by the formulas:

$$A_i = \frac{\left| C_r(y) \right|}{\displaystyle\sum_{j=-J_{fy}}^{+J_{fy}} \Phi_r^2(j\Delta_y)},$$

$$\varphi_i = \mathrm{atan}\, 2\big(\mathrm{Im}\, \mathrm{C}_r(y), \mathrm{Re}\, \mathrm{C}_r(y)\big),$$

where:

$C_r(y)$ - correlation sum value $C_r(y)$ at maximum (p.2.3);
ReC $u$ ImC _ real and virtual parts C ;
atan 2(*Im,Re*) -function of the arctangent of two arguments, defined on the interval: $-\pi \div \pi$.

**Step 130:** subtracting by the computer signals corresponding to bright spots from the previously received radar image, wherein after the subtraction a background image comprising speckle noise remains.

Further, the bright spot signal is subtracted from the current RI by means of a computer and using the following formula:

$$\mathbf{Z}\big(k + j_k, n + j_n\big) = \mathbf{Z}\big(k + j_k, n + j_n\big) - A_i \exp\big(\mathbf{j}\varphi_i\big)\cdot \Phi_a\big(x + j_k \Delta_x\big)\cdot \Phi_r\big(y + j_n \Delta_y\big),$$

$$j_k = -J_{sk}, \big(-J_{sk} + 1\big), ..., \big(+J_{sk} - 1\big), +J_{sk},$$

$$j_n = -J_{sn}, \big(-J_{sn} + 1\big), ..., \big(+J_{sn} - 1\big), +J_{sn},$$

where:

$k, n$ - RI indices in azimuth and range, which correspond to the discrete coordinates $x_m$, $y_m$ of the selected bright spot;
$J_{sk}$, $J_{sn}$ - parameters of the algorithm that determine the size of the window on which signals of bright spots are subtracted from RI, equal to $(2J_{sk}-1) \times (2J_{sn}-1)$.

As a result of performing the above-described computational procedures, a set of bright spots with positive amplitudes $A_i$, coordinates in azimuth $x_i$ and distance $y_i$ are determined. $\{A_i,\ x_i,\ y_i\}$. In addition, a residual complex background signal **F**($i,j$) is also obtained, which is obtained by subtracting the signals of all bright spots from RI.

The complex background signal **F**($i,j$) is converted into a real background signal:

for an amplitude image F($i,j$) = |**F**($i,j$)|,
for a power image F($i,j$) = |**F**($i,j$)|$^2$.

The complex background signal is a complex RI obtained after its synthesis from a radio hologram. Pixels of such an image have complex meanings. To display the image on the screen, it is transformed into an amplitude one by receiving a module therefrom, or a power one by receiving the square of a module. The power image has a greater dynamic range and contrast.

In some embodiments of the invention, for the selected bright spots one assesses their exact coordinates with a smaller increment, compared to the increment of the initial data.

**Step 140:** smoothing by the computer the remaining background image by using a filter suppressing the speckle noise.

Then, in the next step, in order to suppress the speckle noise, the background signal F($i,j$) is "smoothed out" using, for example, one of the following local possible filters: Lee filter, Kuan filter, Lee-sigma filter or Gamma filter. In this case, the specific type of the selected filter is an option technical solution and is not limiting. All the above filters perform the same function: smooth the signal, reducing the noise level and increasing the interpreting quality of RI. The more the signal is smoothed, the more blurred are the outlines of objects and bright spot targets. The choice of a specific filter is a compromise between the noise level and the clarity of objects in the image.

In a specific embodiment, in the case of using a Lee filter, logic is used, according to which if the value of mean square deviation of the set of window elements $\sigma_{i,j}$ is small, then RI is averaged (based on the filter window). Otherwise, if the value $\sigma_{i,j}$ is large, then there is no averaging of RI.

Lee filter functions according to the following formula:

$$F_S(i,j) = M_{i,j} + k_{i,j} \cdot \left( F(i,j) - M_{i,j} \right),$$

where:

$F_S(i,j)$ - smoothed background signal;
$M_{i,j}$ - average (arithmetic) value of the set of elements of the filter window:

$$M_{i,j} = \frac{1}{N_W^2} \sum_{n=-n_W}^{+n_W} \sum_{m=-n_W}^{+n_W} F(i+n, j+m) \; ;$$

$N_W$ - the size of the local filter (square) window; it is assumed that $N_W$ - odd number:

$$N_W = 2 \cdot n_W + 1 ;$$

$k_{i,j}$ - weight coefficient:

$$k_{i,j} = \begin{cases} 1 - \dfrac{C_{RI}}{ENL} \left( \dfrac{M_{i,j}^2}{\sigma_{i,j}^2} \right), & with: \dfrac{C_{RI}}{ENL} \left( \dfrac{M_{i,j}^2}{\sigma_{i,j}^2} \right) < 1, \\[4mm] 0, & with: \dfrac{C_{RI}}{ENL} \left( \dfrac{M_{i,j}^2}{\sigma_{i,j}^2} \right) \geq 1; \end{cases}$$

$C_{RI}$ - constant, the numerical value of which:

$$C_{RI} = \begin{cases} 0.273 & - for\ an\ amplitude\ image, \\ 1.0 & - for\ a\ power\ image; \end{cases}$$

$\sigma_{ij}$ - mean square deviation of the set of window elements:

$$\sigma_{i,j} = \sqrt{\left( \frac{1}{N_W^2} \sum_{n=-n_W}^{+n_W} \sum_{m=-n_W}^{+n_W} F^2(i+n, j+m) \right) - M_{i,j}^2} \; ;$$

$ENL$ - equivalent number of non-coherent accumulations; filter parameter.

In another embodiment, in the case of using the Kuan filter, as well as the Lee filter, if the value of the mean square deviation of the set of window elements $\sigma_{i,j}$ is small, then the RI is averaged. Otherwise, if the value $\sigma_{i,j}$ is large, then there is no averaging of RI.

The output RI $F_S(i,j)$ in the Kuan filter is also represented in the form of a weighted sum of the input RI $F(i,j)$ and the average (over the filter window) RI $M_{i,j}$.

However, in the Kuan filter, no linear approximation is used for the multiplicative noise model, and in the general case, the following expression is obtained for the weight coefficient $k_{i,j}$:

$$k_{i,j} = \frac{\left(1 - \dfrac{C_{RI}}{ENL}\dfrac{M_{i,j}^2}{\sigma_{i,j}^2}\right)}{\left(1 + \dfrac{C_{RI}}{ENL}\right)}.$$

Thus, the Kuan filter differs from the Lee filter only in the expression for the weight coefficient $k_{i,j}$.

In yet another embodiment, the Lee-Sigma filter performs signal averaging only over those window elements, the deviation of which from the central $ij$-th element of the RI, F($i,j$), does not exceed $2\cdot\sigma_{i,j}$ - two mean square deviations of a set of the filter window elements.

The Lee-sigma filter functions according to the following formula:

$$F_S(i,j) = \frac{\displaystyle\sum_{n=-n_W}^{+n_W}\sum_{m=-n_W}^{+n_W}\delta_{nm}\cdot F(i+n,j+m)}{\displaystyle\sum_{n=-n_W}^{+n_W}\sum_{m=-n_W}^{+n_W}\delta_{nm}},$$

where:

$\delta_{nm}$ - Kronecker symbols, taking the values 0 or 1, which are determined by the formula:

$$\delta_{nm} = \begin{cases} 1, & \textit{with: } \left|F(i+n,j+m) - F(i,j)\right| \leq C_{LS}\sigma_{i,j}; \\ 0, & \textit{with: } \left|F(i+n,j+m) - F(i,j)\right| > C_{LS}\sigma_{i,j}, \end{cases}$$

$C_{LS}$ - filter parameter, the recommended numerical value of which: $C_{LS} \approx 2.0$

The effect of filters on smoothing the background is strongly dependent on the size of its window being used $N_W$. In a specific implementation, the value $N_W$ must be at least ten: $N_W \geq 10$.

**Step 150:** forming an output radar signature by the computer based on the determined complex amplitudes and coordinates of bright spots, as well as the smoothed remaining background image.

Then, an output image is formed by a computer from the following parameters after image synthesis:

- a set of bright spots $\{A_k, x_k, y_k\}$ with amplitudes $A_k$, coordinates in azimuth $x_k$ and range $y_k$, and
- the smoothed background signal $F_S(i,j)$ on a discrete grid with an increment in azimuth $\Delta_x$ and an increment in range $\Delta_y$.

The output real ORI Q($i,j$) is formed on a discrete grid with an increment $\Delta_Q$ equal in azimuth and in range, according to the formula:

$$Q(i,j) = F_B(i\Delta_Q, j\Delta_Q) + F_P(i\Delta_Q, j\Delta_Q),$$

where:

$i\Delta_Q$ $u$ $j\Delta_Q$ - the coordinates in azimuth and in range of the pixel of the output ORI;
For example, the increment of the output ORI can be taken the same as the one of the input RI - 0.125 meters. Or 4 times more accurate, 0.03125 meters per pixel, in order to better see the exact location of the spot targets found by means of a technical solution.

$F_B(x,y)$ - background signal function, which is determined by using a bilinear interpolation of the array elements

$F_S(i,j)$:

for an amplitude image:

$$F_B(x,y) = \sum_{i,j} F_S(i,j) \cdot \Lambda\left(\frac{x - i\Delta_Q}{\Delta_x}\right) \cdot \Lambda\left(\frac{y - j\Delta_Q}{\Delta_y}\right),$$

for a power image:

$$F_B(x,y) = \sum_{i,j} F_S^2(i,j) \cdot \Lambda\left(\frac{x - i\Delta_Q}{\Delta_x}\right) \cdot \Lambda\left(\frac{y - j\Delta_Q}{\Delta_y}\right);$$

$\Lambda(x)$ - roof function:

$$\Lambda(x) = \begin{cases} 1 - |x|, & \text{with: } |x| \leq 1.0, \\ 0 & \text{with: } |x| > 1.0; \end{cases}$$

$F_P(x,y)$ - the function of the signal of bright spots, in the determination of which a roof function with the width of the base $2\Delta_Q$ is used as the IR:

for an amplitude image:

$$F_P(x,y) = \sum_k A_k \cdot \Lambda\left(\frac{x - x_k}{\Delta_Q}\right) \cdot \Lambda\left(\frac{y - y_k}{\Delta_Q}\right),$$

for a power image:

$$F_P(x,y) = \sum_k A_k^2 \cdot \Lambda\left(\frac{x - x_k}{\Delta_Q}\right) \cdot \Lambda\left(\frac{y - y_k}{\Delta_Q}\right).$$

The technical solution described above is a relatively non-complex and can be used for the implementation on-board of an air vehicle in real time or remotely.

The hardware implementation of the composite target decomposition system into elements of the radar target signature, which implements the method described above, will be described below.

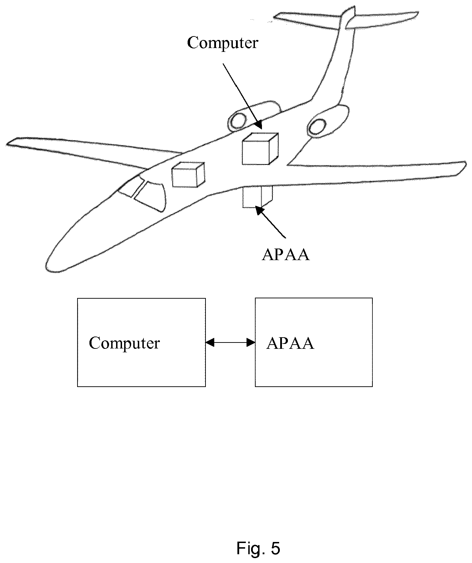

The system consists of two components, integrated into a single unit or mutually independent: antenna complex with a receive/transmit analog highway and a computer for processing data as shown in Fig. 5..

In this case, the antenna complex is mounted inside or outside the carrier in such a way as to provide a lateral view and thus to allow synthesis of the SAR aperture.

The system comprises a signal generation and processing unit or a computer. This computer can be implemented as a 3U-VPX unit, known in the prior art, which has an active air-cooling system, as well as a power supply system from the on-board voltage.

The computer contains at least one general-purpose board and a high-performance MXM CUDA computing board. In some embodiments of the invention, the computer is implemented in the form of several 3U-VPX boards of the VITA-56 standard and is configured to:

- Control and manage the system operation;
- Interact based on external interfaces;
- Track the air vehicle telemetry;
- Process data.

The computer can perform the following functions: the generation of a signal at the frequency of the radar operation, the transmission of the signal to the APAA, the recording of the incoming signal from APAA, the compression (matched filtering) of the signal by range and the recording of the result on the disk.

In addition, the computer contains a disk subsystem that can be implemented as a 3U-VPX board of the VITA-56 standard. This subsystem contains an array of solid-state disks connected by the NVME standard. The disk subsystem is designed for a long-term data storage (radio holograms and their processing results). The disk subsystem is designed to store various types of data to support the operation of the system. The disk subsystem can be implemented in the form of any type of volatile memory, non-volatile memory or a combination thereof, for example, static random access memory (SRAM), electrically erasable programmable read only memory (EEPROM), erasable programmable read only memory (EPROM), programmable read only memory (PROM), read only memory (ROM), magnetic memory, flash-memory, magnetic disk or optical disk and other, but not limited to.

In addition, the computer may contain an information input/output subsystem, which includes a 3U-VPX board of the VITA-56 standard based on FPGA with a mezzanine module - a high-speed multichannel ADC. This subsystem is designed to digitize data, perform signal compression by range through the coordinated filtering implemented on the FPGA. In addition, the subsystem performs the function of forming a code sequence for emission and monitors the operation of the subsystem for generation and reception of HF-signals.

The computer may include a HF-signal generation/reception subsystem that can be implemented as a board that is designed in a 3U-VPX form factor. This subsystem conducts formation of emitting impulses at a high frequency (10 GHz) and conducts phase modulation of the signal (BPSK) as well. In some embodiments of the invention, the subsystem performs the role of a preamplifier for transmission. In addition, it is responsible for reception and amplification of the response, demodulation and division into in-phase and quadrature components (I and Q components).

In addition, the computer may comprise a subsystem for power supply, telemetry and external interfaces. This subsystem is designed to provide power to the entire complex. The input receives on-board power in a wide range of values (18-76 V); at the output, there is a stable constant voltage of all required ratings (+5, -5, +12, -12, +32).

The system for autofocusing radar images of an air vehicle contains, in addition, the APAA antenna complex, which is made in the form of a specialized unit and contains a frame, as well as a cooling subsystem (air, passive one).

The APAA antenna complex includes a control unit, which is designed to monitor the state of the APAA equipment, control the operation cyclogram depending on the mode. It also provides interaction by the control channel with external devices.

The APAA antenna system includes a receive/transmit highway containing an array of terminal amplifiers and an array of low-noise amplifiers. The receive/transmit highway is designed in the form of a set of receive/transmit modules (one for each of the APAA channels) and is designed to amplify the emitted and received signals for their correct processing.

In addition, the APAA antenna complex contains a set of broadband emitters, which is made of aluminium by laser cutting.

The system additionally contains an inertial navigation system based on MEMS sensors, which are a set of different sensors (MEMS) for acceleration, speed and orientation in space. The sensors are connected to a microcontroller, which ensures correct reading and smoothing of the data.

In an exemplary embodiment, the system may be implemented by one or more Specialized Integrated Circuits (SIS), Digital Signal Processor (DSP), Digital Signal Processing Devices (DSPDs), Programmable Logic Device (PLD), field-programmed gate array (FPGA), controller, microcontroller, microprocessor or other electronic components, and can be configured to implement the method for autofocusing air vehicle radar images.

The computer system for autofocusing air vehicle radar images may include a display interface that transmits graphics, text and other data for display, and may be a touch one. The touch screen of the display can usually display graphics (for example, a radio hologram) and text, and also provides a user interface (for example, a graphical user interface (GUI)) through which the user can interact with the system, for example, access and interact with the applications running in the system.

As will be understood by the person skilled in the prior art, the aspects of this technical solution may be implemented in the form of a system, a method or a computer program product. Accordingly, various aspects of this technical solution can be implemented solely as hardware, as software (including application software, etc.) or as an embodiment combining software and hardware aspects, which in general may be referred to as the "module", "system" or "architecture". In addition, some details of the implementation of this technical solution may take the form of a computer program product implemented on one or more machine-readable media having a machine-readable program code that is implemented thereon.

Any combination of one or more machine-readable media can also be used. The machine-readable medium of the data storage may represent, without limitation, an electronic, magnetic, optical, electromagnetic, infrared or semiconductor system, a device, or any suitable combination thereof. More specifically, examples (non-exhaustive list) of machine-readable storage media include: an electrical connection using one or more wires, a portable computer floppy disk; a hard disk, RAM, ROM, erasable programmable read-only memory (EPROM or Flash memory), a fiber optic connection, CD-ROM, an optical storage device, a magnetic storage device or any combination of the above. In the context of this description, a machine-readable storage medium can be any flexible data medium that can contain or store a program for use by the system, device, apparatus, or in conjunction therewith.

The program code embedded in the machine-readable medium can be transmitted by any medium, including, without limitation, wireless, wire, fiber optic, infrared, and any other suitable network or a combination of the above listed.

The computer program code for performing operations for the steps of this technical solution can be written in any programming language or a combination of programming languages, including an object-oriented programming language such as Java, Smalltalk, C++, etc., and conventional procedural programming languages such as the programming language "C" or similar programming languages. The program code can be executed on the system computer in full, in part, or as a separate software package, partly on the local computer and partly on the remote computer, or completely on the remote computer. In the latter case, the remote computer can be connected to the local computer via an available network of any type, including a wide area network (WAN) or a connection to an external computer (for example, via the Internet using Internet providers).

The aspects of this technical solution have been described in detail with reference to block diagrams, circuit diagrams and/or diagrams of methods, devices (systems) and computer program products in accordance with embodiments of this technical solution. It should be noted that each block from the block diagram and/or diagrams, as well as combinations of blocks from the block diagram and/or diagrams, can be implemented by computer program instructions. These computer program instructions may be provided to a general-purpose computing processor, a special-purpose computer, or another data processing device to create a procedure in such a way that the instructions executed by the computer processor or other programmable data processing device create the means for implementing the functions/actions specified in the block(s) of the block diagram and/or diagram.

These computer program instructions may also be stored on a machine-readable medium that can control a computer other than a programmable data processing device or other than devices that operate in a specific manner in such a way that instructions stored on the machine-readable medium create a device including instructions that perform the functions/actions specified in the block of the block diagram and/or the diagram.

USED SOURCES OF INFORMATION

1. B.V. Bardin, "Fast Median Filtering Algorithm", NAUCHNOE PRIBOROSTROENIE, 2011, Vol. 21, No. 3, p. 135-139.

**Claims**

1. A method for decomposing composite targets into elements of a radar signature of a super-resolution target, using the entire signal spectrum, including the following steps:

　　• obtaining from a radar at least one radar image comprising a plurality of spots having various brightness in form of a radio hologram;
　　• determining by a computer complex amplitudes and coordinates of bright spots on the radar image obtained at the previous step, based on an iterative procedure from brighter to less bright spots;
　　• subtracting by the computer signals corresponding to bright spots from the previously received radar image, wherein after the subtraction a background image comprising speckle noise remains;
　　• smoothing by the computer the remaining background image by using a filter suppressing the speckle noise;
　　• forming an output radar signature by the computer based on the determined complex amplitudes and coordinates of bright spots, as well as the smoothed remaining background image.

2. The method according to claim 1, **characterized in that** the radio hologram is obtained as a complex Synthetic Aperture Radar (SAR) data function.

3. The method according to claim 1, **characterized in that** the amplitudes of the bright spots are determined in a side view mode.

4. The method according to claim 1, **characterized in that** determining complex amplitudes and coordinates of the bright spots comprises excluding composite bright spots from consideration based on an iterative procedure.

5. The method according to claim 4, **characterized in that** the composite bright spots are excluded until all the remaining spots become approximately of the same width of the profile.

6. The method according to claim 1, **characterized in that** determining the amplitudes of bright spots comprises stopping the iterative procedure if an amplitude of a currently determined bright spot is below a predetermined threshold value.

7. The method according to claim 6, **characterized in that** the threshold value is set to a fraction of a maximum amplitude of the input radar image.

8. The method according to claim 1, **characterized in that** subtracting signals corresponding to bright spots from the previously received radar image also comprises converting a complex background signal into a real-valued background signals for an amplitude image and for a power image.

9. The method according to claim 1, **characterized in that** smoothing the remaining background image comprises using a Lee filter, a Kuan filter, a Lee-sigma filter, and/or a Gamma filter.

10. The method according to claim 1, **characterized in that** the output radar signature is formed on a discrete grid with an increment of constant azimuth and range.

11. The method according to claim 1, **characterized in that**, for selected bright spots their precise coordinates are assessed with a smaller increment.

12. A data processing system comprising means for carrying out the steps of the method according to any one of claims 1-11.

13. A computer program comprising instructions which, when the program is executed by a computer, cause the computer to carry out the steps of the method according to any one of claims 1-11.

RI

bright spot

Back
ground

Fig. 1

Fig. 2

Fig. 3

Obtaining at least one radar image in the form of a radio hologram from the radar — 110

Determining by means of a computer the complex amplitudes and coordinates of bright spots on the radar image obtained at the previous step, based on an iterative procedure from brighter to less bright spots — 120

Subtracting by means of a computer the signals from bright spots from the previously received radar image, as a result of which a background image remains — 130

Performing the smoothing of the resulting background image by using a filter suppressing the speckle noise — 140

Forming the output radar image, by means of a computer, on the basis of a set of bright spots with amplitudes, coordinates in azimuth and range, as well as a smoothed background signal — 150

Fig. 4

Computer

APAA

| Computer | ←→ | APAA |

Fig. 5

Europäisches
Patentamt

European
Patent Office

Office européen
des brevets

# EUROPEAN SEARCH REPORT

Application Number

EP 18 20 7247

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | FABRIZIO LOMBARDINI ET AL: "Superresolution Differential Tomography: Experiments on Identification of Multiple Scatterers in Spaceborne SAR Data", IEEE TRANSACTIONS ON GEOSCIENCE AND REMOTE SENSING, IEEE SERVICE CENTER, PISCATAWAY, NJ, US, vol. 50, no. 4, 1 April 2012 (2012-04-01), pages 1117-1129, XP011439820, ISSN: 0196-2892, DOI: 10.1109/TGRS.2011.2164925 * abstract * * paragraphs [00II] - [000A] * | 1-13 | INV. G01S13/90 |
| Y | US 6 046 695 A (POEHLER PAUL L [US] ET AL) 4 April 2000 (2000-04-04) * abstract * * column 10, line 9 - line 13 * * column 10, line 42 - line 46 * | 1-13 | |
| Y | WO 2015/008310 A1 (CONSIGLIO NAZIONALE RICERCHE [IT]) 22 January 2015 (2015-01-22) * abstract * * page 1, line 12 - line 16 * * page 5, line 25 - line 37 * * page 6, line 8 - line 11 * | 1-13 | TECHNICAL FIELDS SEARCHED (IPC) G01S |

The present search report has been drawn up for all claims

| Place of search | Date of completion of the search | Examiner |
|---|---|---|
| Munich | 16 May 2019 | Alberga, Vito |

EPO FORM 1503 03.82 (P04C01)

## ANNEX TO THE EUROPEAN SEARCH REPORT
## ON EUROPEAN PATENT APPLICATION NO.

EP 18 20 7247

This annex lists the patent family members relating to the patent documents cited in the above-mentioned European search report.
The members are as contained in the European Patent Office EDP file on
The European Patent Office is in no way liable for these particulars which are merely given for the purpose of information.

16-05-2019

| Patent document cited in search report | | Publication date | Patent family member(s) | | Publication date |
|---|---|---|---|---|---|
| US 6046695 | A | 04-04-2000 | NONE | | |
| WO 2015008310 | A1 | 22-01-2015 | EP | 3022582 A1 | 25-05-2016 |
| | | | WO | 2015008310 A1 | 22-01-2015 |

For more details about this annex : see Official Journal of the European Patent Office, No. 12/82

**EP 3 657 212 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **B.V. BARDIN.** Fast Median Filtering Algorithm. *NAUCHNOE PRIBOROSTROENIE,* 2011, vol. 21 (3), 135-139